(19) Europäisches Patentamt
European Patent Office
Office européen des brevets

(11) **EP 2 963 132 A1**

(12) **EUROPEAN PATENT APPLICATION**
published in accordance with Art. 153(4) EPC

(43) Date of publication:
**06.01.2016 Bulletin 2016/01**

(51) Int Cl.:
*C22B 11/00* (2006.01)    *C22B 1/02* (2006.01)
*C22B 3/04* (2006.01)    *C22B 3/44* (2006.01)

(21) Application number: **13876392.5**

(22) Date of filing: **10.04.2013**

(86) International application number:
**PCT/JP2013/060794**

(87) International publication number:
**WO 2014/132458 (04.09.2014 Gazette 2014/36)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **27.02.2013 JP 2013037786**

(71) Applicant: **JX Nippon Mining & Metals Corp.
Chiyoda-ku
Tokyo 100-8164 (JP)**

(72) Inventors:
• **HATANO,Kazuhiro
Hitachi-shi
Ibaraki 317-0056 (JP)**
• **AOTO,Yuki
Hitachi-shi
Ibaraki 317-0056 (JP)**
• **KATSUKAWA,Koji
Hitachi-shi
Ibaraki 317-0056 (JP)**

(74) Representative: **Hooiveld, Arjen Jan Winfried et al
Arnold & Siedsma
Bezuidenhoutseweg 57
2594 AC The Hague (NL)**

(54) **METHOD FOR LEACHING GOLD FROM GOLD ORE CONTAINING PYRITE**

(57)    The present invention provides a method for leaching gold from gold ore containing pyrite. There is provided A method for leaching gold comprising: a pretreatment stage including: a step 1 of preparing gold ore containing pyrite and a step 2 of heating the gold ore under an inert atmosphere to 450°C or more to pyrolyze the pyrite in the ore into iron (II) sulfide and elemental sulfur; a solid-liquid separation step 3 of contacting the pretreated gold ore with an iron-leaching solution containing one or more selected from sulfuric acid, hydrochloric acid and an aqueous $Fe^{3+}$ salt solution to leach iron component contained in the ore, and thereafter subjecting the resulting solution to a solid-liquid separation to obtain post iron-leaching solution and residue; a leaching step 4 of contacting the residue from the step 3 with a gold-leaching solution containing halide ions, copper ions, and iron ions while supplying an oxidizing agent, to leach gold component contained in the residue; and an iron-leaching solution regeneration step 5 of precipitating and removing the iron component from the post iron-leaching solution obtained in step 3 as a form of oxyiron hydroxide.

[Fig. 1]

**Description**

[Technical field]

The present invention relates to a method for leaching gold from gold ore which contains pyrite.

[Background of the invention]

As a method for recovering gold from sulfide ore containing gold, a technique relying on the hydrometallurgical process is known. Traditionally, the leaching of gold from the sulfide ore into a solution has been conducted by using reagents such as cyanide, thiourea, thiosulfate, halogen gas or the like. Recently, a gold-leaching solution containing chloride ions, iron ions, copper ions and bromide ions is proposed as a less toxic leaching solution as described in Japanese Patent Application Publication No. 2008-106347 (Patent document 1) and Japanese Patent Application Publication No. 2009-235525 (Patent document 2).

Further, as a pretreatment for facilitating the leaching of gold from sulfide ore, a method of subjecting sulfide ore to oxidizing roasting is known and, recently, a pretreatment method comprising the oxidizing roasting process combined with one or other processes has been proposed. For example, Japanese Patent Application Publication No. 2010-235999 (Patent Document 3) proposed a method of subjecting copper sulfide ore to leaching treatment at a temperature below the melting point of the sulfur, allowing the resulting fine sulfur particles and remaining non-leached sulfide particles to float up from the leached residue through utilization of the difference in their hydrophobicity from other iron oxide and gangue components, and separating iron oxide or gangue by precipitation or as ore tailings, whereby the gold contained in the residual solution is concentrated. Thereafter, the condensed components containing gold is subjected to sulfur removal and then to the oxidizing roasting so as to transform the iron component into iron oxide (hematite) which, in turn, is dissolved in sulfuric acid, whereby the residue containing the concentrated gold is recovered.

With respect to pyrite only, it has been known that pyrite is pyrolyzed into pyrrhotite, which is readily-soluble to acid, and sulfur. Japanese Patent Application Publication No. 2005-042155 (Patent document 4) suggests utilizing the reaction to remove pyrite from the residue obtained after leaching copper sulfide ore containing pyrite and to enrich the noble metal.

[Prior art literatures]

Patent document 1: Japanese Patent Application Publication No. 2008-106347
Patent document 2: Japanese Patent Application Publication No. 2009-235525
Patent document 3: Japanese Patent Application Publication No. 2010-235999
Patent document 4: Japanese Patent Application Publication No. 2005-042155

[Summary of the invention]

[Problem to be solved by the invention]

The method disclosed in Japanese Patent Application Publication No. 2009-235525 (Patent document 2), which does not use highly toxic cyanide, thiourea, thiosulfate, halogen gas, or the like and facilitates leaching of the gold contained in copper sulfide ore, is highly practical for leaching the gold included in the copper sulfide ore. However, when this method is applied to the pyrite ore, the gold-leaching speed is not sufficient.

As such, a pretreatment which uses the oxidizing roasting by supplying oxygen as disclosed in Japanese Patent Application Publication No. 2010-235999 (Patent document 3) is considered to remove sulfur in advance and to facilitate iron leaching.

However, if the method of the oxidizing roasting of sulfide ore, including the method disclosed in the Patent document 3, is adopted, the following chemical reactions, $2CuS+2O_2 \rightarrow 2CuO+SO_2$, $2CuFeS_2+6O_2 \rightarrow CuO+4SO_2+Fe_2O_3$ and $4FeS_2+11O_2 \rightarrow 2Fe_2O_3+8SO_2$ will occur predominantly, and accordingly the problem of significant generation of sulfur dioxide ($SO_2$), which is known as environmental contaminant, cannot be avoided. As for pretreatment for enhancing the gold-leaching speed, it is desirable, from the aspects of the safety and the protection of the environment, to decrease the sulfur dioxide which is generated during a treatment method of ores for gold-leaching, thereby enhancing the safety and reducing the influence on the environment.

Further, during the process of leaching gold from gold ores containing pyrite, a great amount of iron-containing byproduct is also produced, but considering reutilization of the gold-leaching solution, it is desirable to establish a gold-leaching method which can also separate such byproduct.

The Patent document 4 is related to a process predicated on recovering noble metal with pyrometallurgy in view of the problem residing in recovering noble metal with hydrometallurgy. As such, there is no supposition that noble metal should be leached with a hydrometallurgical process (see paragraphs 0007-0008, 0078 of the patent document 4). Further, it does not suggest the effect achieved by utilizing a hydrometallurgical process at all.

Therefore, the present invention has been invented under the above-mentioned situations, and has an object of providing a method for leaching gold from gold ore containing pyrite, without using such reagents as toxic cyanide, thiourea, thiosulfate, halogen gas, and has an object of enhancing the gold-leaching speed while the generation of sulfur dioxide is suppressed, the gold leaching speed is enhanced, and reutilization of the gold-leaching solution is made possible.

[Means for solving the problem]

The present invention, in one aspect, provides a method for leaching gold comprising:

a pretreatment stage including a step 1 of preparing gold ore containing pyrite and a step 2 of heating the gold ore under an inert atmosphere to 450°C or more to pyrolyze the pyrite in the ore into iron (II) sulfide and elemental sulfur;

a solid-liquid separation step 3) of contacting the pretreated gold ore with an iron-leaching solution containing one or more selected from sulfuric acid, hydrochloric acid and an aqueous $Fe^{3+}$ salt solution to leach iron component contained in the ore, and thereafter subjecting the resulting solution to a solid-liquid separation to obtain a post iron-leaching solution and residue;

a leaching step 4) of contacting the residue from the step 3) with a gold-leaching solution containing halide ions, copper ions, and iron ions while supplying an oxidizing agent, to leach gold component contained in the residue; and

an iron-leaching solution regeneration step 5) of precipitating and removing the iron component from the post iron-leaching solution obtained in the step 3) as a form of oxyiron hydroxide.

In one embodiment of the gold-leaching method according to the present invention, the solid-liquid separation in the step 3 is performed when the Fe leaching ratio is at least 70% and the oxidation-reduction potential (reference electrode is Ag/AgCl electrode) of iron-leaching solution is less than 530mV.

In another embodiment of the gold-leaching method according to the present invention, the iron-leaching solution does not contain copper ions.

In a further embodiment of the gold-leaching method according to the present invention, the method includes repetition of the step 3 by using the iron-leaching solution resulting from the step 5 as an iron-leaching solution.

In a further embodiment of the gold-leaching method according to the present invention, the step 2 is performed under a non-oxidative atmosphere.

In a further embodiment of the gold-leaching method according to the present invention, the gold-leaching solution contains chloride ions and bromide ions.

In a further embodiment of the gold-leaching method according to the present invention, the pyrolysis in the step 2 is carried out under the conditions of retaining the gold ore at 600-750°C for 5-60 minutes.

In a further embodiment of the gold leaching method according to the present invention, the content of the pyrite in the gold ore is 5-80 mass%.

In a further embodiment of the gold leaching method according to the present invention, the elemental sulfur generated in the step 2 which is in the form of gas is separated from the gold ore by solid-gas separation.

In furthermore embodiment of the gold-leaching method according to the present invention, iron (II) sulfide and elemental sulfur generated in the step 2 are both recovered as solids after cooling and subjected to the step 3 together with the gold ore which have been subjected to the pretreatment stage.

In a further embodiment of the gold-leaching method according to the present invention, the gold-leaching step 4 is performed while retaining pH of the gold-leaching solution at 2.0 or less.

In a further embodiment of the gold-leaching method according to the present invention, at least one valuable metal except iron in the post iron-leaching solution from the step 3 is recovered prior to the step 5.

[Effect of the invention]

By conducting the pretreatment according to the present invention on the gold ore containing the pyrite ore and then conducting the gold-leaching with a specific gold-leaching solution, a remarkably improved gold-leaching speed can be attained, while the generation of noxious sulfur oxide is suppressed. In other words, the present invention provides a highly practical gold-leaching method which excels in the safety and preservation of the environment.

[Brief explanation of the drawings]

Fig. 1 is a flow diagram according to the gold-leaching method of the present invention.

Fig. 2 is a graph showing the relation between the leaching time and the Au grade in the residues with respect to the test conducted in an example.

Fig. 3 is a graph showing the relation between the leaching time and the gold-leaching ratio in a test conducted in an example.

Fig. 4 is a graph showing the relation between the leaching time and iron-leaching ratio in a test conducted in an example.

Fig. 5 is a TG/DTA curve obtained during thermal analysis under a nitrogen atmosphere for ground pyrite concentrate used in Example 1.

[Mode of practicing the invention]

The present invention will be explained in details in the following.

1. Pretreatment

One embodiment of pretreatment of gold ore according to the present invention includes step 1 of preparing gold ore containing pyrite and step 2 of heating the gold ore under a non-oxidative atmosphere to 450°C or more to pyrolyze the pyrite in the gold ore into iron (II) sulfide and elemental sulfur.

(1) Step 1

In the step 1, gold ore containing pyrite is prepared. This is because the present invention aims at the enhancement of the leaching ratio of gold in the pyrite, which is difficult to dissolve and has a low gold-leaching ratio. However, the other conditions, such as the concentration of gold in the ore, for example, are not questioned. The gold ore, which is the object of treatment, may be those having been subjected to conventional beneficiation such as floatation or gravity separation. It is also possible to grind the ore to smaller particle sizes so that the contact of gold-leaching solution with gold within the ore is facilitated. The gold concentration of the gold ore is typically in the order of 0.1-100 ppm by mass, and more typically in the order of 1-20 ppm by mass.

In addition to pyrite, the gold ore may contain chalcopyrite, galena, sphalerite, arsenopyrite, antimonite, pyrrhotite. In a typical example of the present invention, gold ore containing at least 5 mass% of pyrite, more typically at least 30 mass% of pyrite, is used. By using such gold ore, the effect of the pretreatment of the present invention is remarkably achieved. There is no particular upper limit to the content of the pyrite in the gold ore and 100 mass% is allowable but typically the content is at most 80 mass%.

(2) Step 2

In the conventional technique, the ores were subjected to oxidizing roasting under the presence of the oxygen or air, and hence the sulfur contained in the sulfide ores was combined with the oxygen, resulting in generation of sulfur oxide. In the present invention, such oxidizing roasting is not carried out substantially. Instead, according to the present invention, the gold ore is heated in the step 2 at 450°C or more to pyrolyze the pyrite included in the gold ore into iron (II) sulfide and elemental sulfur. This reaction is expressed by the formula $FeS_2 \rightarrow FeS+S$. From the standpoint of suppressing the generation of sulfur oxides, it is preferable to conduct the step 2 in a condition that oxygen feed is suppressed, preferably in a non-oxidative atmosphere. The condition of such suppressed oxygen feed means in the present invention that the molar ratio of oxygen/pyrite ore = 1/ 2 or less. Also, the non-oxidative atmosphere means that the molar ratio of oxygen /pyrite = 1/5 or less, preferably 1/10 or less.

If the mixing of oxygen is suppressed, the amount of sulfur oxide generation is low and accordingly there is no necessity of installing a sulfuric acid production facility. A shower tower will be enough to remove it. If the non-oxidative atmosphere is used, even the shower tower may be dispensed with.

] The pyrolyzed gold ore exhibits remarkably enhanced solubility into the gold leaching solution as will be explained hereafter and the leaching speed of gold may increase by approximately ten times more than the case without pyrolysis. In the pyrolysis according to the present invention, since most pyrite ($FeS_2$) is converted to iron (II) sulfate and not converted to hematite ($Fe_2O_3$), it was anticipated that the ratio of gold-leaching would not be sufficient. Therefore, it was quite amazing that such remarkable result has been attained.

As the non-oxidative atmosphere for conducting the pyrolysis, reductive atmosphere such as ammonia, carbon monoxide and hydrogen sulfide, and inert atmosphere such as rare gas (e.g. argon or helium), nitrogen and carbon dioxide may be cited. Among them, inert atmosphere is preferable in terms of preventing unexpected reaction to occur. Alternatively, the exhausted gas used in the pyrolysis may be reused by recycling.

During the pyrolysis, it is necessary to maintain the temperature of the gold ore at least 450°C. This is because the pyrolysis of the pyrite is difficult to proceed at a temperature below 450°C. Preferably, pyrolysis is performed while keeping the temperature at least 550°C and more preferably keeping the temperature at least 650°C. Also, it is preferable to keep the retention temperature for at least 5 minutes, preferably for at least 15 minutes. This is to sufficiently progress the pyrolysis reaction. However, if the temperature of the gold ore is excessively high, the energy for heating the ore and the processing time become too excessive, and accordingly the retention temperature is preferably 800°C or less, and more preferably 750°C or less. Similarly, the time for maintaining the retention temperature is preferably 120 minutes or less, more preferably 60 minutes or less.

Although there is no particular restriction to the type of the heating furnace for the pyrolysis, a tubular furnace or a rotary kiln, for example, may be used.

The elemental sulfur generated by pyrolysis has been gasified in the high temperature furnace and accordingly the elemental sulfur can be subjected to solid/gas separation and then can be delivered together with the atmospheric gas to a venting system. However, if the elemental sulfur is sent to the venting system, the sulfur will deposit with the decreasing temperature and may cause trouble such as clogging of the gas flue. Therefore, it is desired to recover the sulfur with a wet scrubber. Alternatively, the gaseous elemental sulfur may be cooled together with the iron (II) sulfide generated in the step 2. In this case, they are recovered as solids, which in turn are sent together to the gold-leaching step. The elemental sulfur is separated in the leaching step as leaching residue without interfering with the leaching of gold. In this case, this method is economical because the wet scrubber becomes unnecessary.

Depending on the operational limitation, there may be a case where pyrolyzed gold ore and unpyrolyzed gold ore are comingled and subjected to the iron-leaching step and subsequent steps. However, even in such case, the gold ore which has been subjected to the pyrolysis step is contained and accordingly such embodiment, too, belongs to the technical scope of the present invention.

2. Leaching step

In one embodiment of the gold-leaching method according to the present invention, leaching steps are carried out which comprise a step 3 of contacting the pretreated gold ore with an iron-leaching solution containing at least one selected from sulfuric acid, hydrochloric acid and an aqueous $Fe^{3+}$ salt solution to leach iron component contained in the ore, and thereafter subjecting the resulting solution to a solid-liquid separation to obtain a post iron-leaching solution and residue, and a gold leaching step 4 of contacting the residue obtained from the step 3 with a gold-leaching solution containing halide ions, copper ions and iron ions while supplying oxidant thereby to leach the gold component contained in the residue.

In order to repeatedly use the post leaching solution after iron and gold were leached together, it is necessary to recover the leached gold and thereafter remove a part of the iron as precipitate of iron hydroxide. If the iron and gold are leached together without using the step 2, a precipitation reaction of a part of the iron will proceed but gold will also be undesirably precipitated as a loss. To prevent this problem, it is necessary to add an acid to keep the solution at pH 1.5 or less and then alkali must be added during iron precipitation to increase pH and the pH must be lowered again for repeated use of the leaching solution. This will undesirably increase the cost for reagents and the concentration of salt in the leaching solution. Accordingly, it is beneficial to conduct the step 2 beforehand.

On the other hand, the iron (II) sulfide generated in the step 2 is easily dissolved with an acid and these problems are solved. However, there occurs another new problem that iron is easily mixed in the post gold-leaching solution if the gold leaching is performed without removing the iron (II) sulfide. Therefore, it is preferred to remove the iron components including the iron (II) sulfide prior to gold-leaching step for higher gold leaching speed as well as higher purity of the gold.

(1) Step 3

In the step 3, the pretreated gold ore is contacted with an iron-leaching solution containing one or more selected from sulfuric acid, hydrochloric acid and an aqueous $Fe^{3+}$ salt solution to leach iron component contained in the ore, and thereafter the resulting solution is subjected to a solid-liquid separation. There is no particular restriction to the method for contacting the iron-leaching solution with the gold ore and sprinkling method, immersion method or the like may be adopted. From aspect of reaction efficiency, a preferred method is to immerse and agitate the gold ore in the leaching solution. The leaching of iron is preferably effected while an oxygen source such as air or oxygen is supplied from the standpoint of dissolution efficiency of the iron (II) sulfide. As the type of iron-leaching solution, aqueous solution of $Fe^{3+}$ salt is more preferred because this solution makes it possible to repeatedly use the leaching solution.

In addition, at the time of leaching the iron, the solution temperature is preferably at least 60°C, more preferably at least 70°C for speedy leaching of iron. However, if the solution temperature is excessively high, evaporation of the leaching solution and excessive iron precipitation which inhibit the gold-leaching in the following step will occur and accordingly 100°C or less is preferred, 90°C or less is more preferred. Also, if copper ions are contained in the iron-leaching solution, the leaching of gold is accelerated and hence it is preferred that the copper ions are not contained in the iron-leaching solution. It should be noted that the copper ions here refer to those derived from the iron-leaching solution and the present invention is not excluded from case where the copper ions are derived from the ores.

As for the solid-liquid separation, filtration, squeezing, decant, centrifugal separation or other known methods may be cited and there is no particular restriction but filter press is preferred because the manipulation is easy and low water content residue is obtained.

The endpoint of the iron-leaching step will now be explained. When iron is leached, gold is exposed to the leaching solution but it is known that there is little leaching of gold at a low oxidation-reduction potential. Typically, the oxidation-reduction potential (reference electrode is Ag/AgCl electrode) is 700mV or more at the start but when the iron leaching is started, the oxidation-reduction potential is rapidly decreased down to 500mV or less due to the dissociation of the iron sulfide into $Fe^{2+}$ and $S^{2-}$. When the leaching of iron proceeds to some extent, if further supply of the oxidant is continued, the oxidation-reduction potential gradually increases and the leaching of gold progresses. In other words, when the leaching of iron proceeds rapidly, the oxidation-reduction potential is lowered to a great extent, and the gold becomes difficult to be leached and thus when solid-liquid separation is effected during the period of this lowered oxidation-reduction potential, the loss of gold is suppressed as much as possible while iron can be removed. Empirically, it is preferred to perform the removal of iron when the Fe leaching ratio is at least 70% and the oxidation-reduction potential (reference electrode is Ag/AgCl electrode) of the leaching solution is less than 530mV; more preferably when the Fe leaching ratio is at least 75% and the oxidation-reduction potential (reference electrode is Ag/AgCl electrode) of the leaching solution is less than 500mV ; and further more preferably when the Fe leaching ratio is at least 80% and the oxidation-reduction potential (reference electrode is Ag/AgCl electrode) of the leaching solution is less than 450mV.

(2) Step 4

Subsequently, the step 4 is carried out in which the residue obtained in the step 3 is contacted with a gold-leaching solution containing halide ions, copper ions and iron ions while supplying an oxidant, thereby to leach gold component in the residue.

The leaching of gold proceeds as follows. The dissolved gold reacts with halide ions, particularly chloride ions or bromide ions, to form a gold halide complex, particularly chloride complex or bromide complex of gold. Though chloride ions may be singly used as the halide ions in the gold-leaching solution, the combined use of chloride and bromide ions allows formation of a complex at a lower oxidation-reduction potential, thereby enhancing the leaching efficiency of gold. Further, iron ions in the form of ferric ions formed under supply of oxidant, or ferric ions from the beginning, function to oxidize the gold. The gold-leaching solution preferably contains copper ions. Although the copper ions do not directly participate in the reaction, the oxidation of the iron ions is accelerated in the presence of the copper ions.

As the source of chloride ions, though there is no particular restriction, hydrogen chloride, hydrochloric acid, metal chloride and chorine gas, etc. may be cited for instance. From the aspects of economy and safety, it is preferable to feed the ions as metal chloride salt. Cited as metal chloride salts are copper chloride (cuprous chloride, cupric chloride), iron chloride (ferrous chloride, ferric chloride), chloride of alkaline metal (lithium, sodium. potassium, rubidium, cesium, francium), alkaline earth metal (beryllium, magnesium, calcium, strontium, barium, radium) can be cited. Sodium chloride is preferred from the standpoints of cost and easy availability. It is also preferable to use copper chloride and iron chloride because they are utilized also as sources of copper ions and iron ions.

As the source of the bromide ions, although there is no particular restriction, hydrogen bromide, hydrobromic acid, metal bromide and bromine gas can be cited. As metal bromide, copper bromide (cuprous bromide and cupric bromide), iron bromide (ferrous bromide, ferric bromide), bromide of alkaline metal (lithium, sodium. potassium, rubidium, cesium and francium), bromide of alkaline earth metal (beryllium, magnesium, calcium, strontium, barium, radium), and from the economical standpoint and easy availability, sodium bromide is preferred. Also, copper bromide and iron bromide are preferred because they can be also used as sources of copper ions and iron ions.

Copper ions and iron ions are usually supplied in the form of their salts, for example, halide salts. The copper ions are preferably supplied in the form of copper chloride and/or copper bromide, and the iron ions are preferably supplied in the form of iron chloride and/or iron bromide, from the standpoint that they can be also used as sources of chloride ions and/or bromide ions. As the copper chloride and iron bromide, it is preferable to use cupric chloride ($CuCl_2$) and ferric chloride ($FeCl_3$), respectively, but cuprous chloride (CuCl) and ferrous chloride ($FeCl_2$) may also be used because they are respectively oxidized into cupric chloride ($CuCl_2$) and ferric chloride ($FeCl_3$) by supplying oxidant to the leaching solution.

The concentration of the chloride ions in the gold-leaching solution used in the step 4 is preferably 30g/L-180g/L.

The concentration of the bromide ions in the gold- leaching solution is preferably 1g/L-100g/L from the standpoints of the reaction rate and the solubility, and more preferably 10g/L-40g/L from the economical standpoint. And, the total concentration of the chloride ions and bromide ions is preferably 120g/L-200g/L. Also, the weight ratio of bromide ions to chloride ions in the gold- leaching solution is preferably at least 1.

The oxidation-reduction potential (reference electrode is Ag/AgCl electrode) of the leaching solution at the beginning of the step 4 (right before contacting of the ores with leaching-solution) is preferably at least 550mV, more preferably at least 600mV, from the standpoint of acceleration of the gold-leaching. Also, during gold-leaching process, it is preferred to maintain the potential at 550mV or more and more preferably at least 600 mV. Also, to promote the gold-leaching, the pH of the leaching solution is preferably maintained at 2.0 or less and preferably 1.8 or less. The temperature of the gold-leaching solution is preferably at least 45°C, and more preferably at least 60°C from the standpoint of acceleration of the gold-leaching. However, excessively high temperature will cause evaporation of the leaching solution or increase the costs for heating, and accordingly 95°C or less is preferable and 85°C or less is more preferable.

Accordingly, in a preferred embodiment of the present invention, a mixed solution containing at least one of hydrochloric acid and hydrobromic acid, at least one of the cupric chloride and cupric bromide, and at least one of ferric chloride and ferric bromide may be used as the gold-leaching solution in the step 4 on the condition that both of chloride ions and bromide ions are contained in the leaching solution.

The oxidation-reduction potential is controlled by supplying the oxidant while conducting the gold-leaching step 4. If the oxidant is not supplied, the oxidation-reduction potential will be decreased and thus the leaching reaction will not proceed. Though there is no particular restriction to the oxidant, oxygen, air, chlorine, bromine and hydrogen peroxide or the like may be cited. An oxidant having excessively high oxidation-reduction potential is not necessary and the air is sufficient. The air is preferred from the standpoint of the cost and safety.

After pretreatment but before the gold-leaching step 4, various treatments for removing impurities in the gold ore may be performed. For example, elemental sulfur can be removed by heating the pretreated gold ore to a temperature at which the elemental sulfur is molten and then separating the elemental sulfur and gold by filtration.

After the leaching of gold and the subsequent solid/liquid separation, gold can be recovered from the resulting gold solution. Although there is no particular restriction to the method for recovering the gold, adsorption on activated carbon, electrowinning, solvent extraction, reduction, cementation and ion exchange or the like may be utilized. Sulfur component may remain as sulfate, sulfide and elemental sulfur in the post gold-leaching solution but the gold leached in the solution can be separated from them by solvent-extraction.

Further, it is also effective to recover gold during the leaching reaction, whereby the concentration of gold in the leaching solution is lowered, and as a result the leaching ratio of gold is increased. This can be performed, for example, by introducing activated carbon with or without lead nitrate into the gold-leaching solution during the leaching reaction.

3. Regeneration of iron-leaching solution

In one embodiment of the gold-leaching method according to the present invention, iron is removed from the post iron-leaching solution resulting from the step 3 by converting the iron component into a solid form as oxyiron hydroxide which is then separated by solid-liquid separation. Then, the step 5 is conducted by which the post iron-leaching solution after the iron has been removed is recycled to the step 3. Incidentally, there may be a case where, at the time of leaching iron, a slight amount of valuable metal such as gold and/or silver is contained in the post iron-leaching solution. It is economically advantageous if they are recovered. Accordingly, before starting the oxidation of the post iron-leaching solution, the valuable metals such as gold or silver, which has been leached together with iron, may be recovered by such a method as adsorption with activated carbon, electrowinning, solvent extraction, cementation, ion exchange or the like.

Iron (II) sulfide (FeS) is mainly dissolved in the post iron-leaching solution and the irons are in the form of $Fe^{2+}$. By oxidizing the iron ions to $Fe^{3+}$ and adjusting the pH to at least about 1.5, preferably 2-3, oxyiron hydroxide (goethite) is precipitated according to the equation $Fe^{3+}+2H_2O \rightarrow FeO(OH)\downarrow +3H+$. By solid-liquid separation, the iron-leaching solution can be regenerated. Thus, the iron-leaching solution can be repetitively, which is advantageous in terms of economy. The Fe concentration of the resulting iron-leaching solution is preferably 50g/L or less, more preferably less than 30g/L, from the aspect of the iron-leaching efficiency. As the solid-liquid separation method, a publicly known method such as filtration, squeezing, decantation, or centrifugal separation may be adopted, and filter press is particularly preferred as the operation is easy and residue of low water content is obtainable.

[Examples]

In the following, the present invention will further be specifically explained by way of working examples. It should be noted that the present invention is not restricted to the examples. The concentration of the metals used in the working examples was determined by the ICP-AES. However, the analysis of the gold used in the examples was conducted according to ICP-AES for quantitative analysis after causing deposition of gold in the specimens by cupellation process (Japanese Industrial Standard JIS M8111).

1. Pyrolysis

Pyrite ore concentrate (produced in Papua New Guinea) was prepared. The content of pyrite in this pyrite ore concentrate was determined by XRD and chemical analysis, and 17 mass% of pyrite was confirmed. The pyrite ore concentrate was milled and ground in a ball mill to adjust the particle size to $50\mu$m at the particle size d80, namely, the particle size at which the cumulative weight becomes 80% in the distribution curve of cumulative weight particle sizes. The d80 was the average of three measurements which were conducted using the laser diffraction particle size distribution analyzer (Shimadzu Corporation Model No. SALD2100).

Subsequently, the ground pyrite ore (1.5kg) was charged in a tubular furnace and heated to 700°C under nitrogen atmosphere for one hour (the rate of temperature rise=10°C/min) and retained for one hour. After letting it cool to the ambient temperature, the XRD analysis was conducted. As results of the analysis before and after heat treatment, it was confirmed that the $FeS_2$ peak in the original ore disappeared and the FeS peak appeared.

2. Leaching operation

Subsequently, leaching operation was conducted on the ground pyrite ore after the heat treatment. Also, for the comparison purpose, the ground pyrite ore was subjected to leaching treatment without heat treatment.

(1) Iron leaching

First of all, using a hydrochloric acidic iron-leaching solution having the composition as listed in Table 1, iron-leaching was conducted under the conditions as listed in Table 2 while providing air during the iron-leaching (0.1 L/min per 1L of the leaching solution) with continuous agitation and finally the solution was subjected to solid-liquid separation into residue and the iron-leaching solution. The result is listed in Table 3. It was confirmed that the leaching of iron was promoted in the example where the pyrolysis was conducted.

Although no substantial "iron leaching" was observed in the comparative example, this will be also called "iron leaching" for the convenience of explanation.

Incidentally, the Au leaching ratio and the Fe leaching ratio were determined according to the following methods. An appropriate quantity of the leaching solution is sampled and diluted with an appropriate quantity of dilute chloric acid and thereafter the concentration is determined by the ICP-AES. If the concentration does not reach the measureable lower limit of the ICP-AES, the specimen is sampled as slurry and is filtered with a 5C filter paper and then dried. The residue is recovered and its weight is determined and then it is decomposed with a sodium peroxide-sodium carbonate fusion method. This is washed out and calibrated with (set with) chloric acid and the Au or Fe concentration is determined by ICP-AES. The leaching ratio is calculated according to the following formula. Incidentally, the Au and Fe which were contained in the original leaching solution must be subtracted from the calculation of the leaching ratio.

$$\text{Leaching ratio}(\%)=(\text{Au or Fe weight dissolved in the leaching solution})/(\text{Au or Fe weight contained in the ore concentrate provided for leaching treatment}) \times 100$$

The weight of the Au or Fe dissolved in the leaching solution can be derived according to the following equation:

$$\text{The weight of the Au or Fe dissolved in the leaching solution}=\text{measured Au or Fe concentration (g/L)}\times\text{ratio of dilution (times)}\times\text{quantity of leaching solution(L)}.$$

The weight of the Au or Fe contained in the concentrate ore provided for leaching treatment can be derived from the following formula:

The weight of the Au or Fe contained in the concentrate ore provided for leaching treatment=grade of Au or Fe contained in the concentrate ore prior to heat treatment (wt%)×quantity of the concentrate ore prior to heat treatment (g)(Comparative Examples) and

and

The weight of the Au or Fe contained in the concentrate ore provided for leaching treatment=grade of Au or Fe contained in the concentrate ore after heat treatment (wt%)×quantity of the concentrate ore after heat treatment (g)(Examples)

[TABLE 1]

|  | Iron-leaching solution |
|---|---|
| $FeCl_3 \cdot 6H_2O$(g/L) | 10 |
| $CuCl_2 \cdot 2H_2O$(g/L) | 48 |
| NaCl(g/L) | 25 |
| NaBr(g/L) | 103 |
| All chloride ions(g/L) | 40 |
| All bromide ions(g/L) | 80 |
| Initial ORP(mV) (vs.Ag/AgCl) | 717 |
| pH | 1.52 |

[TABLE 2]

| Pulp concentration(g/L) | 100 |
|---|---|
| Solution Temperature(°C) | 85 |
| Leaching period (hrs) | 6 |

[TABLE 3]

|  | No heat treatment | Heat treatment |
|---|---|---|
| Fe leaching ratio | 0% (Not detectable*) | 81.3% |
| ORP(mV) (vs Ag/AgCl) just prior to solid/liquid separation | 562 | 402 |
| Au leaching ratio | 40.2% | 8.1% |
| * The leaching ratio of iron which had not been subjected to heat treatment was not measureable because $Fe^{3+}$ ions contained in the leaching solution had been heated and formed jarosite precipitate. The iron leaching ratio was deemed zero because iron was considered to be little dissolved. | | |

As for the iron-leaching solution, pH was adjusted to 1.9-2.5 and then the iron component was precipitated in the form of oxyiron hydroxide by aeration (and heating, as the case may be), and finally its iron component was removed by filtration. The resulting post treating solution had pH of 1.8 or less and the iron concentration of 2g/L or less, which had a composition utilizable again as an iron-leaching solution. Incidentally, as it was found that a part of gold had been leached in the post iron-leaching solution, the gold was recovered by passing the leaching solution through activated charcoal prior to the pH adjustment. After passing the solution through the column filled with activated carbon, it was determined that the gold concentration was less than 0.05mg/L.

(2) Leaching of gold

Next, leaching of gold was effected using the residue from the iron-leaching step. The conditions for the gold-leaching step will be explained here.

The gold leaching treatment was performed using a hydrochloric acidic gold-leaching solution having the composition as listed in Table 1, with pulp concentration of 100 g/L at the temperature of 85°C. Air was provided (0.1 L/min per 1L of the leaching solution) during the leaching operation with continuous agitation and the oxidation-reduction potential (ORP: vs. Ag/AgCl) was maintained at 550mV or higher. Also, during the leaching, the pH of the gold-leaching solution was maintained approximately at 1.1 by appropriately adding hydrochloric acid. During the leaching operation, filtration was effected at every 6 hour, and thus the residue was repeatedly treated in the fresh leaching solution.

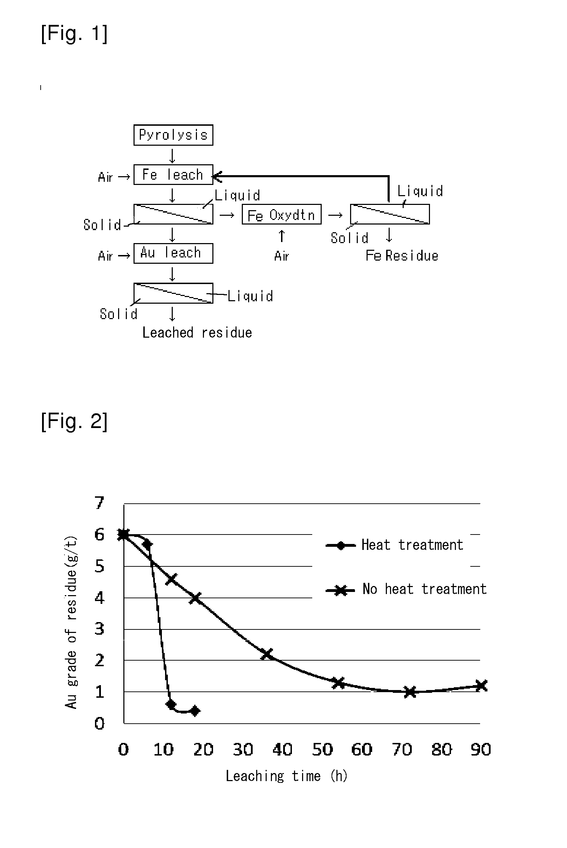

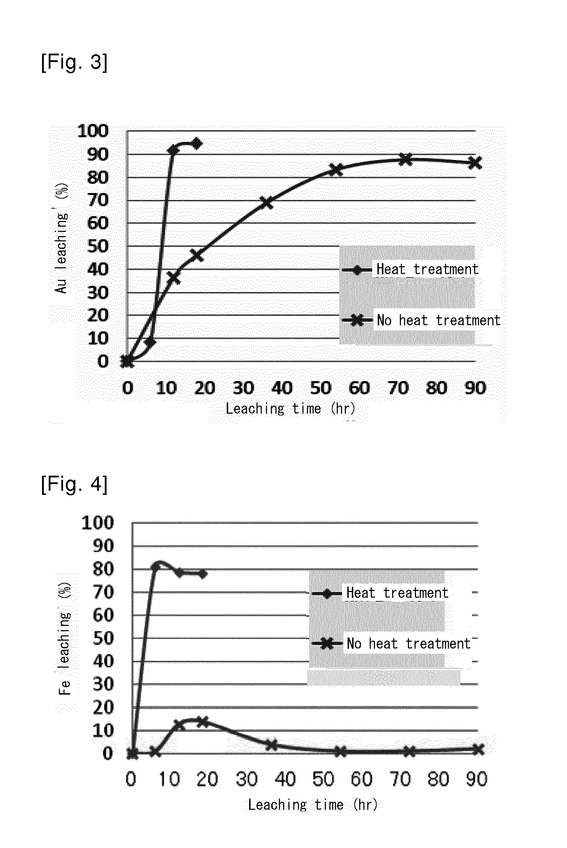

During the leaching test, samples of the leaching residue were periodically taken and the Au grade and the Fe grade were determined. Fig. 2 shows the relation between the leaching time versus the Au grade in the residue obtained from the test. The leaching time in the figure is the accumulated time from the iron leaching. This holds good for the other figures. In Fig. 2, from the plotting of "No heat treatment", it is indicated that, in the case where pyrolysis was not conducted, it takes about 70 hours before the gold grade is lowered to about 1.0g/t. On the other hand, from the plotting of "heat treatment", it is indicated that, in the case where the pyrolysis was conducted, the speed of lowering of the Au grade in the residue takes only 12 hours before it lowers to 0.6g/t. Also, Fig. 4 indicates the relation between the leaching time and the ratio of iron leaching obtained from the above-mentioned test results. From the plotting "heat treatment" in Fig. 4, it is understood that, when the pyrolysis is conducted, the iron leaching efficiency is remarkably enhanced.

Also, during the leaching test, the leaching solution was periodically sampled and the metal concentration was determined to calculate the Au leaching ratio. The method of calculation is as above-mentioned. The result is shown in Fig. 3. By carrying out the pyrolysis, it is understood that, although the Au leaching speed is slow during the initial stage, the Au leaching speed drastically increases after the iron is removed. Incidentally, in case where a gold-leaching solution without bromide ions is used, largely similar results were obtained though the Au leaching speed was not as fast as that in the case with bromide ions.

<The change in the $FeS_2$ and FeS peaks in the XRD caused by pyrolysis condition>

Using 1.5 kg of the ground pyrite ore concentrate used in the above experiments, the changes in the diffraction intensities of $FeS_2$ and FeS in the XRD analysis were observed when the retention temperature and the retention time were changed as shown in Table 4. The test was conducted using a tubular furnace under the nitrogen atmosphere. The elemental sulfur generated by pyrolysis was evaporated and purged by nitrogen stream. The temperature was increased at a rate of 10°C/min for all tests. Cooling was conducted by allowing it cool to a room temperature. The XRD analysis was conducted with type "RINT2200 ultimate" manufactured by Rigaku Corporation. $FeS_2$ has characteristic peaks at $2\theta=32.98°$ and 56.15°. FeS has characteristic peaks at $2\theta=43.67°$ and 33.78°. Accordingly, attention was given to these incident angles. The results are shown in Table 4.

[Table 4]

| Heating Condition | | $FeS_2$ intensity(CPS) | | FeS intensity(CPS) | |
|---|---|---|---|---|---|
| Retention temp.(°C) | Retention time(min) | 32.98° | 56.15° | 43.67° | 33.78° |
| Before heat treatment | | 250 | 170 | ND | ND |
| 550 | 60 | 270 | 250 | ND | ND |
| 550 | 120 | 60 | 60 | ND | ND |
| 600 | 5 | ND | ND | 100 | 120 |
| 600 | 30 | ND | ND | 150 | 100 |
| 600 | 60 | ND | ND | 120 | 130 |
| 650 | 60 | ND | ND | 180 | 130 |

(continued)

| Heating Condition | | FeS$_2$ intensity(CPS) | | FeS intensity(CPS) | |
|---|---|---|---|---|---|
| 700 | 60 | ND | ND | 350 | 190 |
| ND: Less than detectable limit | | | | | |

From the results listed in Table 4, it is confirmed that the peaks assigned to pyrite disappeared when it was heated to at least 600°C. This means that the crystalline pyrite is pyrolyzed and shows that the retention temperature of at least 650°C and the retention time of at least 60 minutes are the most preferred in light of the appearance of clear peaks of FeS.

<Test for the temperature at which pyrolysis occurs>

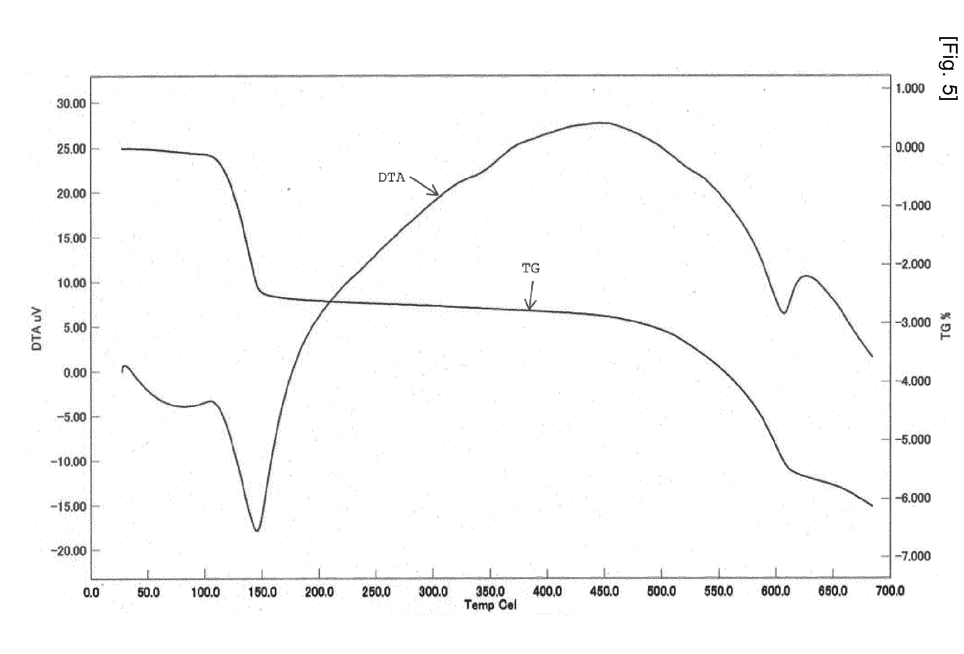

On the ground pyrite ore concentrate used in Example 1, the weight change and the endothermic/exothermic heat at respective temperatures under the nitrogen atmosphere were monitored, using the thermal analysis device (Model TG/DTA6300 manufactured by Seiko Co.). The temperature was increased by 20°C per minute. The results are shown in Fig. 5. From the fact that the mass decrease begins at 450°C and simultaneously the decrease of calorific value is observed, it is confirmed that the pyrolysis of the pyrite begins. Under the nitrogen atmosphere, pyrolysis does not occur until the temperature reaches 450°C. It should be noted that, from the results of the XRD analysis, a long period of time is necessary for pyrolysis around 450°C and accordingly heat treatment at 600°C or higher is desirable.

## Claims

1.  A method for leaching gold comprising:

    a pretreatment stage including:

        a step 1 of preparing gold ore containing pyrite and
        a step 2 of heating the gold ore under an inert atmosphere to 450°C or more to pyrolyze the pyrite in the ore into iron (II) sulfide and elemental sulfur;

    a solid-liquid separation step 3 of contacting the pretreated gold ore with an iron-leaching solution containing one or more selected from sulfuric acid, hydrochloric acid and an aqueous Fe$^{3+}$ salt solution to leach iron component contained in the ore, and thereafter subjecting the resulting solution to a solid-liquid separation to obtain post iron-leaching solution and residue;
    a leaching step 4 of contacting the residue from the step 3 with a gold-leaching solution containing halide ions, copper ions, and iron ions while supplying an oxidizing agent, to leach gold component contained in the residue; and
    an iron-leaching solution regeneration step 5 of precipitating and removing the iron component from the post iron-leaching solution obtained in step 3 as a form of oxyiron hydroxide.

2.  The method for leaching gold according to claim 1, wherein the solid-liquid separation in the step 3 is performed when the Fe leaching ratio is at least 70% and the oxidation-reduction potential (reference electrode is Ag/AgCl electrode) is less than 530mV.

3.  The method for leaching gold according to claim 1 or 2, wherein the iron-leaching solution does not contain copper ions.

4.  The method for leaching gold according to any of one of claims 1 to 3, wherein the iron-leaching solution resulting from the step 5 is recycled to the step 3 as an iron-leaching solution.

5.  The method for leaching gold according to any of one of claims 1 to 4, wherein the step 2 is performed under a non-oxidative atmosphere.

6.  The method for leaching gold according to any of one of claims 1 to 5, wherein the gold-leaching solution contains chloride ions and bromide ions.

7. The method for leaching gold according to any of one of claims 1 to 6, wherein the pyrolysis in the step 2 is carried out under the conditions of retaining the gold ore at 600-750°C for 5-60 minutes.

8. The method for leaching gold according to any of one of claims 1 to 7, wherein the content of the pyrite in the gold ore is 5-80 mass%.

9. The method for leaching gold according to any of one of claims 1 to 8, wherein the gaseous elemental sulfur generated in the step 2 is separated from the gold ore by solid-gas separation.

10. The method for leaching gold according to any of one of claims 1 to 8, wherein iron (II) sulfide and elemental sulfur generated in the step 2 are both recovered as solids after cooling and then subjected to the step 3 together with the gold ore which have been subjected to the pretreatment stage.

11. The method for leaching gold according to any of one of claims 1 to 10, wherein, the gold-leaching step 4 is performed while pH of the gold-leaching solution retains at 2.0 or less.

12. The method for leaching gold according to any of one of claims 1 to 11, wherein, at least one valuable metal except iron in the post iron-leaching solution from the step 3 is recovered prior to the step 5.

[Fig. 1]

[Fig. 2]

[Fig. 3]

[Fig. 4]

[Fig. 5]

## INTERNATIONAL SEARCH REPORT

| | International application No. |
|---|---|
| | PCT/JP2013/060794 |

### A. CLASSIFICATION OF SUBJECT MATTER
*C22B11/00*(2006.01)i, *C22B1/02*(2006.01)i, *C22B3/04*(2006.01)i, *C22B3/44*(2006.01)i

According to International Patent Classification (IPC) or to both national classification and IPC

### B. FIELDS SEARCHED

Minimum documentation searched (classification system followed by classification symbols)
C22B1/00-C22B61/00

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)
JSTPlus(JDreamIII)

### C. DOCUMENTS CONSIDERED TO BE RELEVANT

| Category* | Citation of document, with indication, where appropriate, of the relevant passages | Relevant to claim No. |
|---|---|---|
| A | DUNN, J. G. et al., PYROLYSIS OF ARSENOPYRITE FOR GOLD RECOVERY BY CYANIDATION, Minerals Engineering, 1995, vol.8, No.4/5, p. 459-471 | 1-12 |
| A | JP 2005-42155 A (Sumitomo Metal Mining Co., Ltd.), 17 February 2005 (17.02.2005), paragraphs [0027] to [0078]; fig. 1 to 4 & US 2005/0022629 A1  & AU 2004202870 A1 | 1-12 |
| A | JP 2009-235525 A (Nippon Mining & Metals Co., Ltd.), 15 October 2009 (15.10.2009), paragraphs [0011] to [0073]; fig. 1 to 7 & US 2009/0241735 A1  & CA 2636122 A1 & AU 2008202814 B1 | 1-12 |

☒ Further documents are listed in the continuation of Box C. ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 21 June, 2013 (21.06.13) | 02 July, 2013 (02.07.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2013/060794

C (Continuation). DOCUMENTS CONSIDERED TO BE RELEVANT

| Category* | Citation of document, with indication, where appropriate, of the relevant passages | Relevant to claim No. |
|---|---|---|
| A | JP 2009-526912 A  (Outotec Oyj),<br>23 July 2009 (23.07.2009),<br>paragraphs [0021] to [0022]<br>& US 2009/0158894 A1     & WO 2007/093666 A1<br>& FI 20060149 A          & RS 51835 B<br>& PT 1984531 E           & KR 10-2008-0086540 A<br>& ES 2366589 T3          & EA 200801687 A1<br>& CN 101384737 A         & CA 2642618 A1<br>& BR PI0707951-6 A2      & AU 2007216421 A1 | 1-12 |
| A | JP 7-508073 A  (Intec Pty Ltd.),<br>07 September 1995 (07.09.1995),<br>entire text<br>& WO 1994/000606 A1      & US 5487819 A<br>& RU 2111270 C1          & PL 171300 B1<br>& KR 10-0243922 B        & HU 220835 B1<br>& FI 946086 A            & ES 2139009 T3<br>& EP 646185 B1           & DK 646185 T3<br>& DE 69326462 T2         & CN 1091157 A<br>& CA 2138777 C           & BR PI9306622-8 A<br>& AU 199342999 C         & AP 538 A | 1-12 |

Form PCT/ISA/210 (continuation of second sheet) (July 2009)

**REFERENCES CITED IN THE DESCRIPTION**

**Patent documents cited in the description**

- JP 2008106347 A
- JP 2009235525 A
- JP 2010235999 A
- JP 2005042155 A